# EUROPEAN PATENT APPLICATION

(11) **EP 4 335 901 A1**
(43) Date of publication of application: **13.03.2024**
(21) Application number: 22916612.9
(22) Date of filing: 22.12.2022
(51) Int. Cl.: C08L 25/18, C08L 33/06, C08L 31/00

(54) **ADHESION-IMPARTING RESIN AND PREPARATION METHOD THEREFOR**

(30) Priority: 30.12.2021 KR 20210193430; 16.12.2022 KR 20220177397
(71) Applicant: Kolon Industries, Inc., Seoul 07793 (KR)
(72) Inventor: KIM, Myung Jong, Seoul 07793 (KR); SON, Jeong Soon, Seoul 07793 (KR); LEE, Yong Hee, Seoul 07793 (KR); LEE, Wan Jae, Seoul 07793 (KR); PARK, Seung Soo, Seoul 07793 (KR)
(74) Representative: Ter Meer Steinmeister & Partner
(86) International application number: PCT/KR2022/021080
(87) International publication number: WO 2023/128470

(57) **Abstract**

The present disclosure relates to an adhesion-imparting resin comprising (a) a repeating unit derived from a petroleum resin monomer and (b) a repeating unit derived from an ethylenically unsaturated monomer, which comprises an epoxy group, and having a weight average molecular weight of 5,000 g/mol or less, and has excellent compatibility and reactivity with a specific base compound such that the transparency and heat resistance of an adhesive agent can be improved.

## Description

### TECHNICAL FIELD

The present disclosure relates to an adhesion-imparting resin and a method of preparing the same.

### BACKGROUND ART

t Adhesives are used as materials for securing members in various fields, including automobiles, electronic and electrical products, and building materials.

For example, on an automobile manufacturing site, adhesives are used to secure automobile interior members to the interior of an automobile. In addition, on a manufacturing site for electronic devices, e.g., mobile phones and liquid crystal displays, adhesives are used for securing cushioning materials or the like, installed inside an electronic product for the purpose of protecting the electronic product from impact, for securing exterior members of an electronic product, and for securing members constituting an image display device, such as liquid crystal display devices, organic EL display devices, PDP, or the like.

There has been a transition, among the adhesives, from solvent-based adhesives to water-based adhesives in the interest of reducing environmental impact, and in recent years, a water-based acryl-based adhesive that has an acryl-based polymer, etc. dispersed in an aqueous medium is preferably used.

The acryl-based adhesive is often used in a mixture with an adhesion-imparting resin, to further improve adhesion such as adhesive strength, constant weight holding power, and the like.

However, when used with such adhesion-imparting resin, a degradation in compatibility with an acryl-based polymer included in an acryl adhesive may turn the adhesive opaque, hindering a photocuring reaction, and heat resistance may degrade as well.

In this context, the need for an adhesion-imparting resin having excellent compatibility with an acryl-based polymer has been increasing.

### DESCRIPTION OF EMBODIMENTS

### TECHNICAL PROBLEM

To address the aforementioned problem, the present disclosure provides an adhesion-imparting resin having excellent compatibility or reactivity in relation to an acryl-based polymer or an amine-based curing agent, and a method of preparing the adhesion-imparting resin.

### SOLUTION TO PROBLEM

One aspect of the present disclosure relates to an adhesion-imparting resin including: a repeating unit (a) derived from a petroleum resin monomer; and a repeating unit (b) derived from an ethylenically unsaturated monomer containing an epoxy group, and having a weight average molecular weight of 5,000 g/mol or less.

Another aspect of the present disclosure relates to a method of preparing the adhesion-imparting resin, the method including: a step (a) of obtaining a polymer by carrying out a polymerization reaction of a reaction composition including a petroleum resin monomer and an ethylenenically unsaturated monomer containing an epoxy group; and a step (b) of obtaining an adhesion-imparting resin by carrying out a degassing reaction on the polymer.

### ADVANTAGEOUS EFFECTS OF DISCLOSURE

The adhesion-imparting resin according to the present disclosure may have improved compatibility or reactivity in relation to a specific base compound.

In addition, the adhesion-imparting resin according to the present disclosure may have excellent compatibility or reactivity with an acryl-based polymer or an amine-based curing agent in the base compound, and thus, an adhesive containing the specific base compound and the adhesion-imparting resin may have improved transparency and heat resistance.

### MODE OF DISCLOSURE

Hereinbelow, more aspects and various embodiments of the present disclosure will be described in greater detail.

The terms or words used herein should not be limited to dictionary definitions, and should be interpreted as meanings and concepts corresponding to the technical idea of the present disclosure, based on the principle that the inventor can appropriately define the concepts of terms in order to explain the disclosure in the best way.

The terminology used hereinbelow is used for the purpose of describing particular embodiments only and is not intended to limit the present disclosure. As used herein, the singular forms are intended to include the plural forms as well, unless the context clearly indicates otherwise. As used in the present disclosure, it is to be understood that the terms such as "include", "have", or the like, are intended to indicate the existence of the features, numbers, operations, components, parts, elements, materials, or combinations thereof disclosed in the specification, and are not intended to preclude the possibility that one or more other features, numbers, operations, components, parts, elements, materials, or combinations thereof may exist or may be added.

In particular, one aspect of the present disclosure relates to an adhesion-imparting resin including: a repeating unit (a) derived from a petroleum resin monomer; and a repeating unit (b) derived from an ethylenically unsaturated monomer containing an epoxy group, and having a weight average molecular weight of 5,000 g/mol or less.

For example, if the adhesion-imparting resin satisfies the above relations of the number of moles and the above range of the weight average molecular weight, the compatibility or reactivity with a specific base compound, which will be described below, may improve. Accordingly, an adhesive including the adhesion-imparting resin may have further improved transparency or heat resistance.

According to an embodiment, the petroleum resin monomer may include a commercially applicable liquid mixed C5-C20 fraction, a styrene-based monomer, diolefin, or dicyclopentadiene.

According to another embodiment, the petroleum resin monomer may include a mixed C5 fraction, a mixed C9 fraction, a styrene-based monomer, or dicyclopentadiene.

According to an embodiment, the petroleum resin monomer may include a styrene-based monomer or a mixed C9 fraction.

According to an embodiment, the petroleum resin monomer may include a styrene-based monomer.

For example, the mixed C5 fraction may include, 1-pentene, 2-methyl-2-butene n-pentane, propadiene, dicyclopentadiene, piperylene, isoprene, cyclopentene, and the like.

For example, a mixed C9 fraction may include vinyl toluene, vinyl toluene, α-methyl styrene, styrene, dicyclopentadiene, indene, trans-β-methyl styrene, methylindene, or benzene/toluene/xylene (BTX), and the like.

For example, diolefins may include propadiene, dicyclopentadiene, cyclopentene, and the like.

According to an embodiment, the styrene-based monomer may include a compound represented by Formula 1 below: 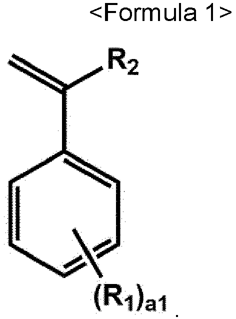 In Formula 1,
R₁ and R₂ may each independently be: hydrogen, deuterium, -F, -Cl, -Br, -I, a hydroxyl group, a cyano group, or a nitro group; or
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-decoxy group, an isodecoxy group, a sec-decoxy group, or a *tert*-decoxy group, which is unsubstituted or substituted with deuterium, -F, -Cl, -Br, -I, a hydroxyl group, a cyano group, a C₆-C₆₀ aryl group, or any combination thereof; or
a phenyl group, a pentalenyl group, a naphthyl group, an azulenyl group, an indacenyl group, an acenaphthyl group, a phenalenyl group, a phenanthrenyl group, an anthracenyl group, a fluoranthenyl group, a triphenyllenyl group, a pyrenyl group, a chrysenyl group, a perylenyl group, a pentaphenyl group, a hepthalenyl group, a naphthacenyl group, a picenyl group, a hexacenyl group, a pentacenyl group, a rubisenyl group, a coronenyl group, or an ovalenyl group, which is unsubstituted or substituted with deuterium, -F, -Cl, -Br, -I, a hydroxyl group, a cyano group, a C₁-C₂₀ alkyl group, a C₁-C₂₀ alkoxy group, a C₆-C₆₀ aryl group, or any combination thereof.

According to an embodiment, R₁ and R₂ may each independently be: hydrogen, deuterium, -F, -Cl, -Br, -I, a hydroxyl group, a cyano group, or a nitro group; or
a methyl group, an ethyl group, an *n*-propyl group, an isopropyl group, an *n*-butyl group, a *sec*-butyl group, an isobutyl group, a *tert*-butyl group, an *n*-pentyl group, a *tert-*pentyl group, a neopentyl group, an isopentyl group, a *sec*-pentyl group, a 3-pentyl group, a *sec*-isopentyl group, an *n*-hexyl group, an isohexyl group, a *sec*-hexyl group, a *tert*-hexyl group, an *n*-heptyl group, an isoheptyl group, a *sec*-heptyl group, a *tert*-heptyl group, an *n-*octyl group, an isooctyl group, a *sec*-octyl group, a *tert*-octyl group, an *n*-nonyl group, an isononyl group, a *sec*-nonyl group, a *tert*-nonyl group, an *n*-decyl group, an isodecyl group, a *sec*-decyl group, a *tert*-decyl group, a methoxy group, an ethoxy group, an *n*-propoxy group, an isopropoxy group, an *n*-butoxy group, a *sec*-butoxy group, an isobutoxy group, a *tert*-butoxy group, an *n*-pentoxy group, a *tert-*pentoxy group, a neopentoxy group, an isopentoxy group, a *sec*-pentoxy group, a 3-pentoxy group, a *sec*-isopentoxy group, an *n-*hexoxy group, an isohexoxy group, a *sec*-hexoxy group, a *tert*-hexoxy group, an *n*-heptoxy group, an isoheptoxy group, a *sec*-heptoxy group, a *tert*-heptoxy group, an *n*-octoxy group, an isooctoxy group, a *sec*-octoxy group, a *tert*-octoxy group, an *n*-nonoxy group, an isononoxy group, a *sec*-nonoxy group, a *tert*-nonoxy group, an *n*-decoxy group, an isodecoxy group, a *sec*-decoxy group, or a *tert*-decoxy group, which is unsubstituted or substituted with deuterium, -F, -Cl, -Br, -I, a hydroxyl group, a cyano group, a C₆-C₆₀ aryl group, or any combination thereof.

According to an embodiment, R₂ may be a methyl group, an ethyl group, an *n-*propyl group, an isopropyl group, an *n*-butyl group, a *sec*-butyl group, an isobutyl group, a *tert*-butyl group, an *n*-pentyl group, a *tert*-pentyl group, a neopentyl group, an isopentyl group, a *sec*-pentyl group, a 3-pentyl group, a *sec*-isopentyl group, an *n*-hexyl group, an isohexyl group, a *sec*-hexyl group, a *tert*-hexyl group, an *n*-heptyl group, an isoheptyl group, a *sec*-heptyl group, a *tert*-heptyl group, an *n*-octyl group, an isooctyl group, a *sec*-octyl group, a *tert*-octyl group, an *n*-nonyl group, an isononyl group, a *sec*-nonyl group, a *tert-*nonyl group, an *n*-decyl group, an isodecyl group, a *sec*-decyl group, or a *tert*-decyl group.

According to an embodiment, R₁ may be deuterium, -F, -Cl, -Br, -I, a hydroxy group, a cyano group, or a nitro group.

a1 may be an integer of 0 to 5.

According to an embodiment, the styrene-based monomer may include styrene, α-methyl styrene, or a combination thereof.

According to an embodiment, the ethylenically unsaturated monomer containing an epoxy group may include a vinyl group, an allyl group, or an acryloyl group.

According to an embodiment, the ethylenically unsaturated monomer including the epoxy group may be a compound represented by Formula 2 below: 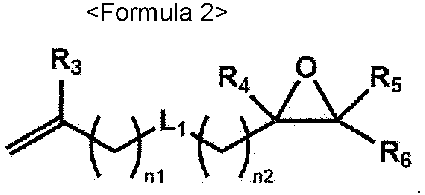 In Formula 2,
L₁ may be *-C(=O)-*', *-C(=S)-*', *-C(=O)-O-*', *-C(=O)-NQ₁-*', *-O-*', *-S-*', or *-NQ₁-*'.

According to an embodiment, L₁ may be *-C(=O)-*', *-C(=O)-O-*', or *-O-*'. According to another embodiment, L₁ may be *-C(=O)-O-*' or *-O-*'.

n1 and n2 may each independently be an integer of 0 to 5.

According to an embodiment, n1 and n2 may each independently be an integer of 0 to 3.

According to another embodiment, n1 may be an integer of 0 to 2. According to another embodiment, n2 may be an integer of 1 to 3.

In Formula 2, R₃ to R₆ and Q₁ may each independently be: hydrogen, deuterium, -F, -Cl, -Br, -I, a hydroxyl group, a cyano group, or a nitro group; or
a methyl group, an ethyl group, an *n*-propyl group, an isopropyl group, an *n*-butyl group, a *sec*-butyl group, an isobutyl group, a *tert*-butyl group, an *n*-pentyl group, a *tert-*pentyl group, a neopentyl group, an isopentyl group, a *sec*-pentyl group, a 3-pentyl group, a *sec*-isopentyl group, an *n*-hexyl group, an isohexyl group, a *sec*-hexyl group, a *tert*-hexyl group, an *n*-heptyl group, an isoheptyl group, a *sec*-heptyl group, a *tert*-heptyl group, an *n-*octyl group, an isooctyl group, a *sec*-octyl group, a *tert*-octyl group, an *n*-nonyl group, an isononyl group, a *sec*-nonyl group, a *tert*-nonyl group, an *n*-decyl group, an isodecyl group, a *sec*-decyl group, a *tert*-decyl group, a methoxy group, an ethoxy group, an *n*-propoxy group, an isopropoxy group, an *n*-butoxy group, a *sec*-butoxy group, an isobutoxy group, a *tert*-butoxy group, an *n*-pentoxy group, a *tert*-pentoxy group, a neopentoxy group, an isopentoxy group, a *sec-*pentoxy group, a 3-pentoxy group, a *sec*-isopentoxy group, an *n-*hexoxy group, an isohexoxy group, a *sec*-hexoxy group, a *tert*-hexoxy group, an *n*-heptoxy group, an isoheptoxy group, a *sec*-heptoxy group, a *tert*-heptoxy group, an *n*-octoxy group, an isooctoxy group, a *sec*-octoxy group, a *tert*-octoxy group, an *n*-nonoxy group, an isononoxy group, a *sec*-nonoxy group, a *tert*-nonoxy group, an *n*-decoxy group, an isodecoxy group, a *sec*-decoxy group, or a *tert*-decoxy group, which is unsubstituted or substituted with deuterium, -F, -Cl, -Br, -I, a hydroxyl group, a cyano group, a C₆-C₆₀ aryl group, or any combination thereof; or
a phenyl group, a pentalenyl group, a naphthyl group, an azulenyl group, an indacenyl group, an acenaphthyl group, a phenalenyl group, a phenanthrenyl group, an anthracenyl group, a fluoranthenyl group, a triphenyllenyl group, a pyrenyl group, a chrysenyl group, a perylenyl group, a pentaphenyl group, a hepthalenyl group, a naphthacenyl group, a picenyl group, a hexacenyl group, a pentacenyl group, a rubisenyl group, a coronenyl group, or an ovalenyl group, which is unsubstituted or substituted with deuterium, -F, -Cl, -Br, -I, a hydroxyl group, a cyano group, a C₁-C₂₀ alkyl group, a C₁-C₂₀ alkoxy group, a C₆-C₆₀ aryl group, or any combination thereof.

According to an embodiment, in Formula 2, R₃ to R₆ and Q₁ may each independently be: hydrogen, deuterium, -F, -Cl, -Br, -I, a hydroxyl group, a cyano group, or a nitro group; or
a methyl group, an ethyl group, an *n*-propyl group, an isopropyl group, an *n*-butyl group, a *sec*-butyl group, an isobutyl group, a *tert*-butyl group, an *n*-pentyl group, a *tert-*pentyl group, a neopentyl group, an isopentyl group, a *sec*-pentyl group, a 3-pentyl group, a *sec-*isopentyl group, an *n*-hexyl group, an isohexyl group, a *sec*-hexyl group, a *tert*-hexyl group, an *n*-heptyl group, an isoheptyl group, a *sec*-heptyl group, a *tert*-heptyl group, an *n-*octyl group, an isooctyl group, a *sec*-octyl group, a *tert*-octyl group, an *n*-nonyl group, an isononyl group, a *sec-*nonyl group, a *tert*-nonyl group, an *n*-decyl group, an isodecyl group, a *sec*-decyl group, a *tert*-decyl group, a methoxy group, an ethoxy group, an *n*-propoxy group, an isopropoxy group, an *n*-butoxy group, a sec-butoxy group, an isobutoxy group, a *tert*-butoxy group, an *n*-pentoxy group, a *tert*-pentoxy group, a neopentoxy group, an isopentoxy group, a *sec*-pentoxy group, a 3-pentoxy group, a *sec*-isopentoxy group, an *n-*hexoxy group, an isohexoxy group, a *sec*-hexoxy group, a *tert*-hexoxy group, an *n*-heptoxy group, an isoheptoxy group, a *sec*-heptoxy group, a *tert*-heptoxy group, an *n*-octoxy group, an isooctoxy group, a *sec*-octoxy group, a *tert*-octoxy group, an *n*-nonoxy group, an isononoxy group, a *sec-*nonoxy group, a *tert*-nonoxy group, an *n-*decoxy group, an isodecoxy group, a *sec-*decoxy group, or a *tert*-decoxy group, which is unsubstituted or substituted with deuterium, -F, -Cl, -Br, -I, a hydroxyl group, a cyano group, a C₆-C₆₀ aryl group, or any combination thereof.

According to another embodiment, in Formula 2, R₃ may be hydrogen, deuterium, - F, -Cl, -Br, -I, a hydroxyl group, a cyano group, or a nitro group; or a methyl group, an ethyl group, an *n*-propyl group, an isopropyl group, an *n*-butyl group, a *sec*-butyl group, an isobutyl group, a *tert*-butyl group, a *n*-pentyl group, a *tert*-pentyl group, a neopentyl group, an isopentyl group, a *sec*-pentyl group, a 3-pentyl group, a *sec*-isopentyl group, an *n*-hexyl group, an isohexyl group, a *sec*-hexyl group, a *tert*-hexyl group, an *n*-heptyl group, an isoheptyl group, a *sec-*heptyl group, a *tert*-heptyl group, an *n*-octyl group, an isooctyl group, a *sec*-octyl group, a *tert*-octyl group, an *n*-nonyl group, an isononyl group, a *sec*-nonyl group, a *tert*-nonyl group, an *n*-decyl group, an isodecyl group, a *sec*-decyl group, or a *tert-*decyl group.

According to another embodiment, R₄ to R₆ may each independently be hydrogen, deuterium, -F, -Cl, -Br, -I, a hydroxyl group, a cyano group, or a nitro group.

According to an embodiment, an ethylenically unsaturated monomer including the epoxy group may be a compound represented by Formula 2-1 or Formula 2-2 below: 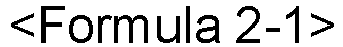 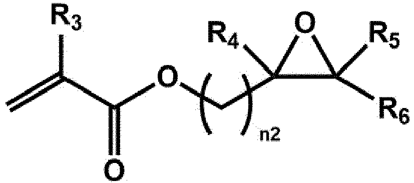 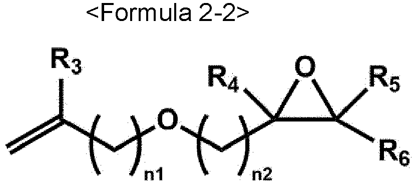 In Formula 2-1 and Formula 2-2,
for descriptions of R₃ to R₆, and n1 and n2, refer to the disclosure of the present specification.

According to another embodiment, an ethylenically unsaturated monomer including the epoxy group may be a compound represented by Formula 2-3 or Formula 2-4 below:

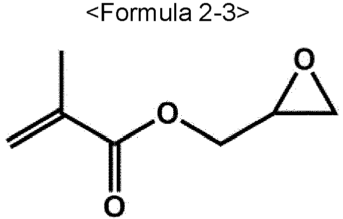

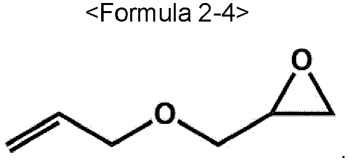

According to an embodiment, at least one end of both ends of the adhesion-imparting resin may have a molecular weight regulator bound thereto.

According to an embodiment, the molecular weight regulator may refer to a chain transfer agent. The molecular weight regulator may include a thiol-based molecular weight regulator, a halocarbon-based molecular weight regulator, or any combination thereof.

According to an embodiment, the halocarbon-based molecular weight regulator may include a halogen. For example, the halocarbon-based molecular weight regulator may include carbon tetrachloride (CCl₄).

According to an embodiment, the thiol-based molecular weight regulator may include an organic mercaptan-based molecular weight regulator containing one or more thiol groups (-SH). For example, the thiol-based molecular weight regulator may contain 1-4 thiol groups (-SH) per molecule.

According to an embodiment, the thiol-based molecular weight regulator may include an aliphatic mercaptan-based molecular weight regulator, a cyclic aliphatic mercaptan-based molecular weight regulator, an aromatic mercaptan-based molecular weight regulator, or any combination thereof.

According to an embodiment, the thiol-based molecular weight regulator may contain 1 to 20 carbons per thiol group. According to another embodiment, the thiol-based molecular weight regulator may contain 1 to 15 carbons per thiol group.

According to an embodiment, the thiol-based molecular weight regulator may further contain other substituent groups other than hydrocarbon groups and thiol groups. For example, the other substituent groups may include a hydroxy group, a carboxylic acid group, an ether group, an ester group, a sulfide group, an amine group, an amide group, or any combination thereof.

According to an embodiment, the organic mercaptan-based molecular weight regulator having a thiol group may include: alkyl mercaptans including ethyl mercaptan, butyl mercaptan, hexyl mercaptan, octyl mercaptan, dodecyl mercaptan, or any combination thereof; thiolphenols including phenyl mercaptan, benzyl mercaptan, or a combination thereof; mercaptans containing a hydroxyl group or a carboxylic acid group, including 2-mercaptoethanol, thioglycolic acid, 3-mercaptopropionic acid, or any combination thereof; or mercaptans having two or more functional groups, including pentaerythritol tetrakis(3-mercapto)propionate; or any combination thereof.

According to another embodiment, the organic mercaptan-based molecular weight regulator having a thiol group may include methyl mercaptan, ethyl mercaptan, butyl mercaptan, octyl mercaptan, lauryl mercaptan, mercaptoethanol, mercaptopropanol, mercaptobutanol, mercaptoacetic acid, mercaptopropionic acid, benzyl mercaptan, phenyl mercaptan, cyclohexyl mercaptan, 1-thioglycerol, 2,2'-dimercaptodiethyl ether, 2,2'-dimercaptodipropyl ether, 2,2'-dimercaptodiisopyropyl ether, 3,3'-dimercaptodipropyl ether, 2,2'-dimercaptodiethyl sulfide, 3,3'-dimercaptodipropyl sulfide, bis(β-mercaptoethoxy) methane, bis(β-mercaptoethylthio) methane, trimethylolpropane trithioglycolate, pentaerythritol tetrathioglycolate, or any combination thereof.

According to an embodiment, the molecular weight regulator may include ethyl mercaptan, butyl mercaptan, hexyl mercaptan, octyl mercaptan, dodecyl mercaptan; phenyl mercaptan, benzyl mercaptan; mercaptoethanol, thiol glycolic acid, mercapto propionic acid; pentaerythritol tetrakis(3-mercapto)propionate, or any combination thereof.

According to another embodiment, the molecular weight regulator may include n-octyl mercaptan, n-dodecyl mercaptan, 2-mercaptoethanol, or a mixture thereof, to thereby maximize the effect of molecular weight control.

According to another embodiment, a molecular weight regulator may not be bound to both ends of the adhesion-imparting resin.

According to an embodiment, the adhesion-imparting resin may have a weight average molecular weight (Mw) of 3,000 g/mol or less.

According to another embodiment, the weight average molecular weight (Mw) of the adhesion-imparting resin may be 500 g/mol to 5,000 g/mol, 1,000 g/mol to 5,000 g/mol, 1,500 g/mol to 5,000 g/mol, 2,000 g/mol to 5,000 g/mol, 2,500 g/mol to 5,000 g/mol, 500 g/mol to 4,500 g/mol, 500 g/mol to 4,000 g/mol, 500 g/mol to 3,500 g/mol, 500 g/mol to 3,000 g/mol, or 1,000 g/mol to 3,000 g/mol.

According to an embodiment, the adhesion-imparting resin may have a number average molecular weight (Mn) of 2,000 g/mol or less. For example, the number average molecular weight (Mn) of the adhesion-imparting resin may be 100 g/mol to 2,000 g/mol, 300 g/mol to 2,000 g/mol, 500 g/mol to 2,000 g/mol, 700 g/mol to 2,000 g/mol, 100 g/mol to 1,800 g/mol, 100 g/mol to 1,600 g/mol, 100 g/mol to 1,400 g/mol, 100 g/mol to 1,200 g/mol, or 700 g/mol to 1,200 g/mol.

According to an embodiment, the adhesion-imparting resin may have a Z-average molecular weight (Mz) of 6,000 g/mol or less. For example, the Z-average molecular weight of the adhesion-imparting resin may be 1,000 g/mol to 6,000 g/mol, 2,000 g/mol to 6,000 g/mol, 3,000 g/mol to 6,000 g/mol, 1,000 g/mol to 5,900 g/mol, 1,000 g/mol to 5,800 g/mol, or 3,000 g/mol to 5,800 g/mol.

According to an embodiment, the adhesion-imparting resin may have polymer dispersity index (PDI) of 1 to 5. For example, the polymer dispersity index (PDI) of the adhesion-imparting resin may be 1.2 to 5, 1.4 to 5, 1.6 to 5, 1.8 to 5, 2.0 to 5, 1.2 to 4.5, 1.2 to 4.3, 1.2 to 4, 1.2 to 3, 1.2 to 2.8, or 2 to 2.8.

For example, with an average molecular weight value and a PDI satisfying the above ranges, the adhesion-imparting resin may have further improved compatibility with an acryl-based polymer.

According to an embodiment, the softening point of the adhesion-imparting resin may be 40 °C to 100 °C. For example, the softening point of the adhesion-imparting resin may be 40 °C to 80 °C, 40 °C to 70 °C, 40 °C to 65 °C, 50 °C to 100 °C, 50 °C to 70 °C, or 50 °C to 65 °C.

According to an embodiment, the viscosity at 160 °C of the adhesion-imparting resin may be 50 cps to 200 cps. For example, the viscosity at 160 °C of the adhesion-imparting resin may be 55 cps to 200 cps, 60 cps to 200 cps, 50 cps to 160 cps, 50 cps to 120 cps, 50 cps to 80 cps, or 60 cps to 70 cps.

According to an embodiment, the viscosity at 180 °C of the adhesion-imparting resin may be 1 cps to 100 cps. For example, the viscosity at 180 °C of the adhesion-imparting resin may be 10 cps to 100 cps, 20 cps to 100 cps, 1 cps to 80 cps, 1 cps to 60 cps, 10 cps to 50 cps, 30 cps to 50 cps, 40 cps to 50 cps, 20 cps to 48 cps, or 30 cps to 48 cps.

According to an embodiment, the adhesion-imparting resin may have a color index value of 10Ga.# or less, according to Gardner Colour scale as measured in accordance with ASTM D1544. For example, the color index value of the adhesion-imparting resin as measured in accordance with ASTM D1544 may be 7 Ga.# or less, 6.6 Ga.# or less, 5 Ga.# or less, 3 Ga.# or less, or 2.3 Ga.# or less. For example, the color index value of the adhesion-imparting resin as measured in accordance with ASTM D1544 may be 0.1 Ga.# to 7 Ga.#, 0.2 Ga.# to 7 Ga.#, 0.5 Ga.# to 7 Ga.#, 0.1 Ga.# to 6.6 Ga.#, 0.2 Ga.# to 6.6 Ga.#, 0.5 Ga.# to 6.6 Ga.#, 0.1 Ga.# to 5 Ga.#, 0.2 Ga.# to 5 Ga.#, 0.5 Ga.# to 5 Ga.#, 0.1 Ga.# to 3 Ga.#, 0.2 Ga.# to 3 Ga.#, 0.5 Ga.# to 3 Ga.#, 0.1 Ga.# to 2.3 Ga.#, 0.2 Ga.# to 2.3 Ga.#, or 0.5 Ga.# to 2.3 Ga.#.

According to an embodiment, the amount of the repeating unit (a) derived from the C9 (mixed) fraction may be more than the amount of the repeating unit (b) derived from the ethylenenically unsaturated monomer containing an epoxy group.

According to an embodiment, the weight of the repeating unit (a) derived from the C9 (mixed) fraction in the adhesion-imparting resin may be 50 wt% or more but less than 100 wt%, with respect to the total weight of the adhesion-imparting resin.

According to another embodiment, the weight of the repeating unit (a) derived from the C9 (mixed) fraction in the adhesion-imparting resin, with respect to the total weight of the adhesion-imparting resin, may be 52 wt% or more, but less than 100 wt%, 54 wt% or more, but less than 100 wt%, 56 wt% or more, but less than 100 wt%, 58 wt% or more, but less than 100 wt%, 60 wt% or more, but less than 100 wt%, 62 wt% or more, but less than 100 wt%, 64 wt% or more, but less than 100 wt%, 66 wt% or more, but less than 100 wt%, 68 wt% or more, but less than 100 wt%, 70 wt% or more, but less than 100 wt%, 72 wt% or more, but less than 100 wt%, 74 wt% or more, but less than 100 wt%, 76 wt% or more, but less than 100 wt%, 78 wt% or more, but less than 100 wt%, 80 wt% or more, but less than 100 wt%, 82 wt% or more, but less than 100 wt%, 84 wt% or more, but less than 100 wt%, 86 wt% or more, but less than 100 wt%, 88 wt% or more, but less than 100 wt%, 50 wt% or more, 98 wt% or less, 50 wt% or more, 96 wt% or less, 50 wt% or more, 94 wt% or less, 50 wt% or more, 92 wt% or less, 50 wt% or more, 90 wt% or less, 50 wt% or more, 88 wt% or less, 50 wt% or more, 86 wt% or less, 50 wt% or more, 84 wt% or less, 50 wt% or more, 82 wt% or less, 50 wt% or more, 80 wt% or less, 74 wt% or more, 84 wt% or less, or 86 wt% or more, 96 wt% or less.

According to an embodiment, the weight of the repeating unit (b) derived from the ethylenenically unsaturated monomer containing an epoxy group in the adhesion-imparting resin may be more than 0 wt% to 50 wt% or less with respect to the total weight of the adhesion-imparting resin.

According to another embodiment, the weight of the repeating unit (b) derived from an ethylenenically unsaturated monomer containing an epoxy group in the adhesion-imparting resin, with respect to the total weight of the adhesion-imparting resin, may be 2 wt% or more to 50 wt% or less, 4 wt% or more to 50 wt% or less, 6 wt% or more to 50 wt% or less, 8 wt% or more to 50 wt% or less, 10 wt% or more to 50 wt% or less, 12 wt% or more to 50 wt% or less, 14 wt% or more to 50 wt% or less, 16 wt% or more to 50 wt% or less, 18 wt% or more to 50 wt% or less, 20 wt% or more to 50 wt% or less, more than 0 wt% to 50 wt% or less, more than 0 wt% to 48 wt% or less, more than 0 wt% to 46 wt% or less, more than 0 wt% to 44 wt% or less, more than 0 wt% to 42 wt% or less, more than 0 wt% to 40 wt% or less, more than 0 wt% to 38 wt% or less, more than 0 wt% to 36 wt% or less, more than 0 wt% to 34 wt% or less, more than 0 wt% to 32 wt% or less, more than 0 wt% to 30 wt% or less, more than 0 wt% to 28 wt% or less, more than 0 wt% to 26 wt% or less, more than 0 wt% to 24 wt% or less, more than 0 wt% to 22 wt% or less, more than 0 wt% to 20 wt% or less, more than 0 wt% to 18 wt% or less, more than 0 wt% to 16 wt% or less, more than 0 wt% to 14 wt% or less, more than 0 wt% to 12 wt% or less, 16 wt% or more to 36 wt% or less, 16 wt% or more to 26 wt% or less, or 4 wt% or more to 14 wt% or less.

According to an embodiment, the mol%, as measured by NMR, of the repeating unit (b) derived from an ethylenenically unsaturated monomer containing an epoxy group may be more than 0 mol% to 50 mol% or less, with respect to the total number of moles of repeating units derived from the monomer included in the adhesion-imparting resin.

According to another embodiment, the mol%, as measured by NMR, of the repeating unit (b) derived from an ethylenenically unsaturated monomer containing an epoxy group may be 4 mol% to 50 mol%, 8 mol% to 50 mol%, 12 mol% to 50 mol%, more than 0 mol% to 49 mol%, more than 0 mol% to 48 mol%, more than 0 mol% to 47 mol%, 4 mol% to 45 mol%, 4 mol% to 40 mol%, 4 mol% to 36 mol%, 4 mol% to 32 mol%, 4 mol% to 28 mol%, or 4 mol% to 24 mol%, with respect to the total number of moles of repeating units derived from the monomer included in the adhesion-imparting resin. For example, the mol% of the repeating unit (b) derived from an ethylenenically unsaturated monomer containing an epoxy group may be measured using ¹H-NMR.

For example, the mol% of the repeating unit (b) derived from an ethylenenically unsaturated monomer containing an epoxy group may be confirmed by analysis of peaks obtained by ¹H-NMR measurement.

According to an embodiment, the mol% of the repeating unit (b) derived from an ethylenenically unsaturated monomer containing an epoxy group may be measured through an integral value between 4.0 ppm and 3.0 ppm, using ¹H-NMR. For example, the mol% of the repeating unit (b) derived from an ethylenenically unsaturated monomer containing an epoxy group may be measured from a ratio of the peak area between 4.0 ppm and 3.0 ppm with respect to the total peak area when measured from 0.0 ppm to 9.0 ppm on a ¹H-NMR spectrum of the adhesion-imparting resin.

According to an embodiment, the mol% of the repeating unit (b) derived from an ethylenenically unsaturated monomer containing an epoxy group may be 6 mol% to 15 mol%, 7 mol% to 15 mol%, 5 mol% to 15 mol%, 5 mol% to 14 mol%, 5 mol% to 13 mol%, 5 mol% to 12 mol%, 5 mol% to 11 mol%, or 6 mol% to 12 mol%, with respect to the total number of moles of repeating units derived from the monomer included in the adhesion-imparting resin.

Another aspect of the present disclosure may provide a method of preparing an adhesion-imparting resin, the method including: a step (a) of obtaining a polymer by carrying out a polymerization reaction of a reaction composition including a C9 (mixed) fraction and an ethylenenically unsaturated monomer containing an epoxy group; and a step (b) of obtaining an adhesion-imparting resin by carrying out a degassing reaction of the polymer.

For example, for the types and properties of the C9 (mixed) fraction and the ethylenenically unsaturated monomer containing an epoxy group, and the properties of the adhesion-imparting resin, refer to the descriptions above.

According to an embodiment, the weight of the C9 (mixed) fraction in the reaction composition may be 50 wt% or more to less than 100 wt%, with respect to the total weight of solids included in the reaction composition.

For example, the solids included in the reaction composition may refer to components other than solvents, among components included in the reaction composition.

According to another embodiment, the weight of a C9 (mixed) fraction in the reaction composition, with respect to the total weight of solids included in the reaction composition, may be 52 wt% or more, but less than 100 wt%, 54 wt% or more, but less than 100 wt%, 56 wt% or more, but less than 100 wt%, 58 wt% or more, but less than 100 wt%, 60 wt% or more, but less than 100 wt%, 62 wt% or more, but less than 100 wt%, 64 wt% or more, but less than 100 wt%, 66 wt% or more, but less than 100 wt%, 68 wt% or more, but less than 100 wt%, 70 wt% or more, but less than 100 wt%, 72 wt% or more, but less than 100 wt%, 74 wt% or more, but less than 100 wt%, 76 wt% or more, but less than 100 wt%, 78 wt% or more, but less than 100 wt%, 80 wt% or more, but less than 100 wt%, 82 wt% or more, but less than 100 wt%, 84 wt% or more, but less than 100 wt%, 86 wt% or more, but less than 100 wt%, 88 wt% or more, but less than 100 wt%, 50 wt% or more, 98 wt% or less, 50 wt% or more, 96 wt% or less, 50 wt% or more, 94 wt% or less, 50 wt% or more, 92 wt% or less, 50 wt% or more, 90 wt% or less, 50 wt% or more, 88 wt% or less, 50 wt% or more, 86 wt% or less, 50 wt% or more, 84 wt% or less, 50 wt% or more, 82 wt% or less, 50 wt% or more, 80 wt% or less, 74 wt% or more, 84 wt% or less 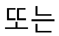 86 wt% or more, 96 wt% or less.

According to an embodiment, the weight of the ethylenenically unsaturated monomer containing an epoxy group in the reaction composition may be more than 0 wt% to 50 wt% or less with respect to the total weight of solids included in the reaction composition.

According to another embodiment, the weight of the ethylenenically unsaturated monomer containing an epoxy group in the reaction composition, with respect to the total weight of solids included in the reaction composition, may be 2 wt% or more to 50 wt% or less, 4 wt% or more to 50 wt% or less, 6 wt% or more to 50 wt% or less, 8 wt% or more to 50 wt% or less, 10 wt% or more to 50 wt% or less, 12 wt% or more to 50 wt% or less, 14 wt% or more to 50 wt% or less, 16 wt% or more to 50 wt% or less, 18 wt% or more to 50 wt% or less, 20 wt% or more to 50 wt% or less, more than 0 wt% to 50 wt% or less, more than 0 wt% to 48 wt% or less, more than 0 wt% to 46 wt% or less, more than 0 wt% to 44 wt% or less, more than 0 wt% to 42 wt% or less, more than 0 wt% to 40 wt% or less, more than 0 wt% to 38 wt% or less, more than 0 wt% to 36 wt% or less, more than 0 wt% to 34 wt% or less, more than 0 wt% to 32 wt% or less, more than 0 wt% to 30 wt% or less, more than 0 wt% to 28 wt% or less, more than 0 wt% to 26 wt% or less, more than 0 wt% to 24 wt% or less, more than 0 wt% to 22 wt% or less, more than 0 wt% to 20 wt% or less, more than 0 wt% to 18 wt% or less, more than 0 wt% to 16 wt% or less, more than 0 wt% to 14 wt% or less, more than 0 wt% to 12 wt% or less, 16 wt% or more to 36 wt% or less, 16 wt% or more to 26 wt% or less, or 4 wt% or more to 14 wt% or less.

According to an embodiment, in the step (a) of obtaining the polymer, the polymerization reaction may be carried out at a temperature of 50 °C to 300 °C for 60 minutes to 240 minutes.

According to another embodiment, the polymer reaction may be carried out at a temperature of 75 °C to 300 °C, 100 °C to 300 °C, 125 °C to 300 °C, 150 °C to 300 °C, 175 °C to 300 °C, 200 °C to 300 °C, 225 °C to 300 °C, 250 °C to 300 °C, 50 °C to 275 °C, 50 °C to 250 °C, 50 °C to 225 °C, 50 °C to 200 °C, 50 °C to 175 °C, 50 °C to 150 °C, 50 °C to 125 °C, 50 °C to 100 °C, 200 °C to 270 °C, 230 °C to 290 °C, 240 °C to 280 °C, or 250 °C to 270 °C.

According to an embodiment, the polymerization reaction may be carried out for 60 minutes to 240 minutes.

According to another embodiment, the polymerization reaction may be carried out for 80 minutes to 240 minutes, 100 minutes to 240 minutes, 120 minutes to 240 minutes, 80 minutes to 220 minutes, 80 minutes to 200 minutes, 80 minutes to 180 minutes, 120 minutes to 180 minutes, or 130 minutes to 170 minutes.

According to an embodiment, the reaction composition may further include a molecular weight regulator. According to another embodiment, the reaction composition may not further include a molecular weight regulator.

According to an embodiment, descriptions of the molecular weight regulator, refer to the disclosure of the present specification above.

According to an embodiment, the weight of the molecular weight regulator may be 1 wt% to 10 wt% with respect to the total weight of solids included in the reaction composition.

According to another embodiment, the weight of the molecular weight regulator may be 4 mol% to 10 mol%, 6 mol% to 10 mol%, or 7 mol% to 10 mol%, with respect to the total weight of solids included in the reaction composition.

According to an embodiment, the reaction composition may further include a polymerization initiator.

For example, the polymerization initiator may include a photopolymerization initiator or a radical initiator.

According to an embodiment, the photopolymerization initiator may include an acetophenone-based initiator, a benzophenol-based initiator, a benzyl-based initiator, a benzoin-based initiator, a sulfur-based initiator, an anthraquinone-based initiator, an azo-based initiator, a peroxide-based initiator, a thiol-based initiator, or any combination thereof.

For example, the acetophenone-based initiator may include 2,2-diethoxyacetophenone, p-dimethylacetophenone, p-dimethylaminopropiophenone, dichloroacetophenone, trichloroacetophenone, p-tert-butylacetophenone, or any combination thereof. For example, the benzophenone-based initiator may include 2-chlorobenzophenone, p,p'-bisdimethylaminobenzophenone, or any combination thereof. For example, the benzyl-based initiator may include benzyl. For example, the benzoin-based initiator may include benzoin methyl ether, benzoin isopropyl ether, benzoin isobutyl ether, benzyldimethyl ketal, or any combination thereof. For example, the sulfur-based initiator may include thioxanthone, 2-chlorothioxanthone, 2,4-diethylthioxanthone, 2-methylthioxanthone, 2-isopropylthioxanthone, or any combination thereof. For example, the anthraquinone-based initiator may include 2-ethylanthraquinone, octamethylanthraquinone, 1,2-benzanthraquinone, 2,3-diphenylanthraquinone, or any combination thereof. For example, the azo-based initiator may include azobisisobutyronitrile. For example, a peroxide-based initiator may include benzoyl peroxide, acetyl peroxide, dilauryl peroxide, di-tert-butyl peroxide, cumene peroxide, hydrogen peroxide, or any combination thereof. For example, the thiol-based initiator may include 2-mercaptobenzoimidazole, 2-mercaptobenzoxazole, 2-mercaptobenzothiazole, or any combination thereof.

According to an embodiment, the radical initiator may include a peroxide-based initiator or an azobis-based initiator.

For example, the perioxide-based initiator may include potassium persulfate, hydrogen peroxide, methyl ethyl ketone peroxide, methyl isobutyl ketone peroxide, cyclohexanone peroxide, methyl cyclohexanone peroxide, acetylacetone peroxide, isobutyryl peroxide, 2,4-dichlorobenzoyl peroxide, o-methyl benzoyl peroxide, bis-3,5,5-trimethylhexanoyl peroxide, 2,4,4-trimethylpentyl-2-hydroperoxide, diisopropylbenzene hydroperoxide, dilauryl peroxide, cumene hydroperoxide peroxide, t-butylhydroperoxide, dicumyl peroxide, 2,5-dimethyl-2,5-di(t-butylperoxy)hexane, 1,3-bis(t-butyloxyisopropyl)benzene, t-butyl cumyl peroxide, 1,1-di-t-butylperoxy-3,3,5-trimethylcyclohexane, 2,2-di-(t-butylperoxy)butane, 4,4-di-t-butylperoxyvaleric acid n-butyl ester, 2,4,4-trimethylpentylperoxyphenoxyacetate, α-cumylperoxyneodecanoate, t-butylperoxybenzoate, di-t-butylperoxytrimethyl adipate, di-3-methoxybutylperoxydicarbonate, di-2-ethylhexylperoxydicarbonate, bis-(4-t-butylcyclohexyl)peroxydicarbonate, diisopropylperoxydicarbonate, acetylcyclohexylsulfonyl peroxide, t-butyl peroxyaryl carbonate, or any combination thereof.

For example, an azobis-based initiator may include 1,1'-azobiscyclohexane-1-carbonitrile, 2,2'-azobis(2,4-dimethylvaleronitrile), 2,2-azobis(methyl Isobutyrate), 2,2'-azobis(4-methoxy-2,4-dimethylvaleronitrile), α,α'-azobis(isobutylnitnyl), 4,4'-azobis(4-cyanovaleic acid), or any combination thereof.

According to an embodiment, in the step (b) of obtain an adhesion-imparting resin by carrying out a degassing reaction on the polymer, the degassing reaction may be carried out at a temperature of 200 °C to 300 °C, at a pressure of 1 mbar to 50 mbar, for 1 minute to 20 minutes.

According to another embodiment, the degassing reaction may be carried out at a temperature of 220 °C to 280 °C, at a pressure of 5 mbar to 25 mbar, for 5 minutes to 15 minutes, or may be carried out at a temperature of 240 °C to 260 °C, at a pressure of 5 mbar to 15 mbar, for 8 minutes to 12 minutes.

According to an embodiment, the adhesion-imparting resin may be applied to an adhesive. According to another embodiment, the adhesion-imparting resin may be applied to an acryl-based adhesive or an amine-based adhesive.

Another aspect of the present disclosure may provide an adhesive including the adhesion-imparting resin. For example, the adhesion-imparting resin may impart tacky properties of an adhesive.

According to an embodiment, the adhesive may be an adhesive including the adhesion-imparting resin; and a base compound. For example, the base compound may include an acryl-based polymer or an amine-based curing agent.

The acryl-based polymer may be a polymer polymerized using methyl acrylate, butyl acrylate, acrylic acid, 2-ethyl acrylate, methyl methacrylate, or any combination thereof, as a monomer.

The amine-based curing agent may include triethylenetetramine, diethylenetriamine, aminoethylpiperazine (N-(2-aminoethyl)piperazine), bis(aminomethyl)norbornane, 1,3-bis(aminomethyl)-cyclohexane, 4,4'-methylenebisisophronediamine, 1,3-phenylenediamine, 4,4'-diaminodiphenylmethane, or any combination thereof.

For example, the adhesion-imparting resin may have excellent compatibility with the acryl-based polymer, such that the adhesive may have excellent transparency. For example, the adhesion-imparting resin due to containing an epoxy group, has excellent reactivity with the amine-based curing agent, such that the adhesive may have excellent heat resistance.

According to an embodiment, the adhesive may be a photocurable adhesive.

For example, the adhesive may further include a crosslinking agent, a polymerization initiation catalyst, or a curing accelerator, etc. in addition to the adhesion-imparting agent and the base compound.

According to an embodiment, the amount of the adhesion-imparting resin in the adhesive may be 5 wt% or more with respect to the total weight of the adhesive.

According to another embodiment, the amount of the adhesion-imparting resin in the adhesive may be 5 wt% to 30 wt%, 5 wt% to 25 wt%, 5 wt% to 20 wt%, 10 wt% to 30 wt%, or 15 wt% to 30 wt%, with respect to the total weight of the adhesive.

According to an embodiment, the adhesive may be transparent. In this case, the adhesive may allow light to penetrate evenly therein, allowing a photocuring reaction to proceed evenly. Accordingly, the heat resistance of the adhesive may further improve.

### [Definition of Terms]

In the present specification, a C₆-C₆₀ aryl group refers to a monovalent group having a carbocyclic aromatic system having 6-60 carbons atoms, and includes a phenyl group, a pentalenyl group, a naphthyl group, an azulenyl group, an indacenyl group, an acenaphthyl group, a phenalenyl group, a phenanthrenyl group, an anthracenyl group, a fluoranthenyl group, a triphenyllenyl group, a pyrenyl group, a chrysenyl group, a perylenyl group, a pentaphenyl group, a hepthalenyl group, a naphthacenyl group, a picenyl group, a hexacenyl group, a pentacenyl group, a rubisenyl group, a coronenyl group, an ovalenyl group, and the like. If the C₆-C₆₀ aryl group contains two or more rings, the two or more rings may be connected to one another.

Hereinbelow, the present disclosure will be described in greater detail with reference to embodiments. The following examples are for illustrative purposes only to describe the present disclosure in greater detail, and it will be apparent to those skilled in the art that these examples should not be construed as limiting the scope of the present disclosure.

### Example 1. Preparation of Adhesion-imparting Resin

In a 1,000 mL-chemical reactor equipped with a stirrer, a reflux condenser, a thermometer, and a nitrogen injection device, monomers (SM: styrene, GMA: glycidyl methacrylate) were injected according to mixing amounts (wt%) shown in Table 1 below, and 350 g of xylene as a solvent and 24.5 g (7 wt%) of 2-mercaptoethanol (2-ME) as a molecular weight regulator were added to produce a reaction composition.

The reaction composition was polymerized at 240 °C for 120 minutes. Subsequently, an adhesion-imparting resin was prepared by carrying out a degassing reaction under the conditions of 250 °C and 10 mbar, for 10 minutes.

### Examples 2 to 11 and Comparative Examples 1 to 3

An adhesion-imparting resin was prepared in the same manner as in Example 1, except that the amount of the monomers, the amount of the molecular weight regulator, and the polymerization conditions were changed as shown in Table 1 below.

**[Table 1]**

| Item | Monomer | | Molecular weight regulator | Polymerization conditions | |
|---|---|---|---|---|---|
| | SM | GMA | | Temperature (°C) | Time (min.) |
| Example 1 | 301 g (86 wt%) | 24.5 g (7 wt%) | 24.5 g (7 wt%) | 240 | 120 |
| Example 2 | 301 g (86 wt%) | 24.5 g (7 wt%) | 24.5 g (7 wt%) | 260 | 120 |
| Example 3 | 301 g (86 wt%) | 24.5 g (7 wt%) | 24.5 g (7 wt%) | 280 | 120 |
| Example 4 | 301 g (86 wt%) | 24.5 g (7 wt%) | 24.5 g (7 wt%) | 240 | 150 |
| Example 5 | 301 g (86 wt%) | 24.5 g (7 wt%) | 24.5 g (7 wt%) | 240 | 180 |
| Example 6 | 273 g (78 wt%) | 52.5 g (15 wt%) | 24.5 g (7 wt%) | 240 | 120 |
| Example 7 | 255.5 g (73 wt%) | 70 g (20 wt%) | 24.5 g (7 wt%) | 240 | 120 |
| Example 8 | 308 g (87 wt%) | 24.5 g (7 wt%) | 17.5 g (6 wt%) | 240 | 120 |
| Example 9 | 304.5 g (86 wt%) | 24.5 g (7 wt%) | 21 g (7 wt%) | 240 | 120 |
| Example 10 | 262.5 g (75 wt%) | 70 g (20 wt%) | 17.5 g (5 wt%) | 240 | 120 |
| Example 11 | 280 g (80 wt%) | 52.5 g (15 wt%) | 17.5 g (5 wt%) | 240 | 120 |
| Comparative Example 1 | 332.5 g (95 wt%) | - | 17.5 g (5 wt%) | 240 | 140 |
| Comparative Example 2 | 315 g (90 wt%) | 24.5 g (7 wt%) | 10.5 g (3 wt%) | 320 | 140 |
| Comparative Example 3 | 315 g (90 wt%) | 24.5 g (7 wt%) | 10.5 g (3 wt%) | 240 | 300 |

### Evaluation Example 1. Molecular Weight Measurement

Using gel permeation chromatography (GPC, manufactured by Hewlett Packard, model name HP-1100), the adhesion-imparting resins prepared in Examples 1 to 11 and Comparative Examples 1 to 3 were measured for weight average molecular weight (Mw), number average molecular weight (Mn), Z-average molecular weight (Mz), and polymer density index (PDI).

The measurements of weight average molecular weight (Mw), number average molecular weight (Mn), Z-average molecular weight (Mz), and polymer density index (PDI) were performed at 30 °C by having 100 µL of each of the adhesion-imparting resins prepared in Examples 1 to 11 and Comparative Examples 1 to 3 dissolved in tetrahydrofuran to a concentration of 4,000 ppm, and injected into GPC, and then flowed at a flow rate of 1.0 mL/min while using tetrahydrofuran as the mobile phase of GPC. For the column, three Plgels (1,000 Å + 500 Å + 100 Å) by Agilent Technologies, Inc. were connected in series. As a detector, an RI detector (product of Hewlett Packard, HP-1047A) was used, and the measurement was made at 30 °C. The measurement results are shown in Table 2.

### Evaluation Example 2. GMA Content Measurement

¹H-NMR spectrum in the range of 0.0 ppm to 9.0 ppm was obtained for each of the adhesion-imparting resins prepared in Examples 1 to 11 and Comparative Examples 1 to 3.

Regarding the measurement results, with respect to the 1H-NMR spectrum measurement results,
the GMA contents were calculated from the ratio of a peak area between 4.0 ppm and 3.0 ppm to the total peak area. The measurement results are shown in Table 2.

### Preparation of Adhesives

15 wt% of each of the adhesion-imparting resins prepared in Examples 1 to 11 and Comparative Examples 1 to 3 was mixed with 85 wt% of an acryl-based polymer, to prepare an acryl-based adhesive.

In addition, 10.4 g of the adhesion-imparting resin according to Example was mixed with 0.1 g of triethylenetetramine to prepare an amine-based adhesive containing an amine-based curing agent.

### Evaluation Example 3. Evaluation of Transparency

Each of the prepared acryl-based adhesives was coated onto a paper with a red letter printed thereon. Transparency of the acryl-based adhesives was evaluated in accordance with whether the coated red letter is clearly visible.

With the transparency of the acryl-based adhesive according to Comparative Example 2 being "△", those with significantly improved transparency relative to the acryl-based adhesive resin according to Comparative Example 2 was marked "⊚", and those with slightly improved transparency relative to the acryl-based adhesive resin according to Comparative Example 2 was marked "o", those with the same transparency relative to the acryl-based adhesive resin according to Comparative Example 2 was marked "△", and those with decreased transparency relative to the acryl-based adhesive resin according to Comparative Example 2 was marked "X".

### Evaluation Example 4. Evaluation of Reactivity

The prepared amine-based adhesive was measured in a Brookfield viscometer cell and measured for viscosity over time at 130 °C. The measurement results are shown in Table 3.

**[Table 2]**

| Item | Weight average molecular weight (g/mol) | Number average molecular weight | Z-average molecular weight | Polymer dispersion index | GMA content (mol%) | Transparency |
|---|---|---|---|---|---|---|
| Example 1 | 2,930 | 1062 | 6819 | 2.76 | 9.1 | ⊚ |
| Example 2 | 2,145 | 881 | 4644 | 2.43 | 8.3 | ⊚ |
| Example 3 | 1,705 | 686 | 3895 | 2.48 | 7.4 | ⊚ |
| Example 4 | 2,829 | 1037 | 6564 | 2.73 | 9.1 | ⊚ |
| Example 5 | 2,947 | 1046 | 6876 | 2.82 | 9.1 | ⊚ |
| Example 6 | 3,795 | 1030 | 10724 | 3.69 | 12.3 | ○ |
| Example 7 | 3,902 | 1054 | 11179 | 3.7 | 13 | ○ |
| Example 8 | 3,586 | 1182 | 8269 | 3.03 | 6.5 | ○ |
| Example 9 | 3,186 | 1078 | 7336 | 2.96 | 8.3 | ○ |
| Example 10 | 4,770 | 1154 | 14070 | 4.13 | 10.7 | ○ |
| Example 11 | 4,708 | 1179 | 13056 | 3.99 | 9.1 | ○ |
| Comparative Example 1 | 3,100 | 1051 | 14132 | 4.23 | 0 | X |
| Comparative Example 2 | 5,100 | 1621 | 13132 | 4.11 | 5.9 | Δ |
| Comparative Example 3 | 5,410 | 1557 | 15020 | 4.4 | 5.8 | Δ |

**[Table 3]**

| Time (min.) | 5 min. | 6 min. | 7 min. | 8 min. | 9 min. | 10 min. | 11 min. | 12 min. |
|---|---|---|---|---|---|---|---|---|
| Viscosity (cP) | 2675 | 2875 | 3300 | 5475 | 6675 | 9425 | 13880 | 22350 |

As shown in Table 2, if the adhesives according to Examples 1 to 11 and Comparative Examples 1 to 3 are compared for transparency,
the adhesives in Examples 1 to 11, including an ethylenically unsaturated monomer containing an epoxy group, and satisfying a weight average molecular weight of 5,000 g/mol or less, were found to have excellent compatibility with acryl-based polymers and therefore, excellent transparency of the adhesives.

Referring to Table 3, it was found that the viscosity of the amine-based adhesive, which contains the adhesion-imparting resin according to Example 1 and an amine-based curing agent, gradually increases over time.

Accordingly, the adhesion-imparting resin disclosed herein, due to including an epoxy group, showed excellent reactivity with an amine-based curing agent.

The examples and comparative examples above have been described as examples to describe the present disclosure, and therefore, the present disclosure is not limited thereto. It will be apparent to those skilled in the art that various modifications can be made therein to enable the present disclosure, and therefore, the scope of the disclosure is defined by the appended claims.

## Claims

1. An adhesion-imparting resin comprising:
a repeating unit (a) derived from a petroleum resin monomer; and
a repeating unit (b) derived from an ethylenically unsaturated monomer containing an epoxy group,
wherein the adhesion-imparting resin has a weight average molecular weight of 5,000 g/mol or less.

2. The adhesion-imparting resin of claim 1,
wherein the adhesion-imparting resin has a weight average molecular weight of 3,000 g/mol or less.

3. The adhesion-imparting resin of claim 1,
wherein the adhesion-imparting resin has a number average molecular weight of 2,000 g/mol or less, a Z-average molecular weight of 6,000 g/mol or less, and a polymer dispersity index (PDI) of 1 to 5.

4. The adhesion-imparting resin of claim 1,
wherein the adhesion-imparting resin has a softening point of 40 °C to 100 °C.

5. The adhesion-imparting resin of claim 1,
wherein the adhesion-imparting resin has a viscosity at 160 °C of 50 cps to 200 cps, and a viscosity at 180 °C of 1 cps to 100 cps.

6. The adhesion-imparting resin of claim 1,
wherein the adhesion-imparting resin has a color index value of 10Ga.# or less according to Gardener Color Standard as measured in accordance with ASTM D1544 standard.

7. The adhesion-imparting resin of claim 1,
wherein the petroleum resin monomer comprises a styrene-based monomer, a mixed C9 fraction, dicyclopentadiene, or a combination thereof.

8. The adhesion-imparting resin of claim 7,
wherein the styrene-based monomer comprises a compound represented by Formula 1: 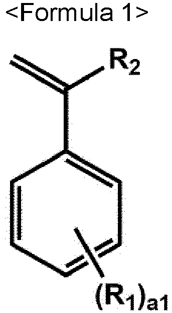 wherein in Formula 1,
R₁ and R₂ are each independently: hydrogen, deuterium, -F, -Cl, -Br, -I, a hydroxyl group, a cyano group, or a nitro group; or
a methyl group, an ethyl group, an *n*-propyl group, an isopropyl group, an n-butyl group, a sec-butyl group, an isobutyl group, a *tert*-butyl group, an *n*-pentyl group, a *tert-*pentyl group, a neopentyl group, an isopentyl group, a *sec*-pentyl group, a 3-pentyl group, a *sec*-isopentyl group, an *n*-hexyl group, an isohexyl group, a *sec*-hexyl group, a *tert*-hexyl group, an *n*-heptyl group, an isoheptyl group, a *sec*-heptyl group, a *tert*-heptyl group, an *n-*octyl group, an isooctyl group, a *sec*-octyl group, a *tert*-octyl group, an *n*-nonyl group, an isononyl group, a *sec*-nonyl group, a *tert*-nonyl group, an *n*-decyl group, an isodecyl group, a *sec-*decyl group, a *tert*-decyl group, a methoxy group, an ethoxy group, an *n*-propoxy group, an isopropoxy group, an *n*-butoxy group, a *sec*-butoxy group, an isobutoxy group, a *tert*-butoxy group, an *n*-pentoxy group, a *tert*-pentoxy group, a neopentoxy group, an isopentoxy group, a *sec*-pentoxy group, a 3-pentoxy group, a *sec*-isopentoxy group, an *n-*hexoxy group, an isohexoxy group, a *sec*-hexoxy group, a *tert*-hexoxy group, an *n*-heptoxy group, an isoheptoxy group, a *sec*-heptoxy group, a *tert*-heptoxy group, an *n*-octoxy group, an isooctoxy group, a *sec*-octoxy group, a *tert*-octoxy group, an *n*-nonoxy group, an isononoxy group, a *sec-*nonoxy group, a *tert*-nonoxy group, an *n*-decoxy group, an isodecoxy group, a *sec*-decoxy group, or a *tert*-decoxy group, which is unsubstituted or substituted with deuterium, -F, -Cl, -Br, -I, a hydroxyl group, a cyano group, a C₆-C₆₀ aryl group, or any combination thereof; or
a phenyl group, a pentalenyl group, a naphthyl group, an azulenyl group, an indacenyl group, an acenaphthyl group, a phenalenyl group, a phenanthrenyl group, an anthracenyl group, a fluoranthenyl group, a triphenyllenyl group, a pyrenyl group, a chrysenyl group, a perylenyl group, a pentaphenyl group, a hepthalenyl group, a naphthacenyl group, a picenyl group, a hexacenyl group, a pentacenyl group, a rubisenyl group, a coronenyl group, or an ovalenyl group, which is unsubstituted or substituted with deuterium, -F, -Cl, -Br, -I, a hydroxyl group, a cyano group, a C₁-C₂₀ alkyl group, a C₁-C₂₀ alkoxy group, a C₆-C₆₀ aryl group, or any combination thereof, and
a1 is an integer of 0 to 5.

9. The adhesion-imparting resin of claim 1,
wherein the ethylenically unsaturated monomer containing an epoxy group includes a vinyl group, an allyl group, or an acryloyl group.

10. The adhesion-imparting resin of claim 1,
wherein the ethylenically unsaturated monomer containing an epoxy group is a compound represented by Formula 2: 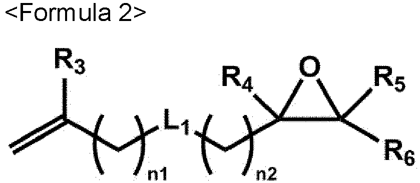 wherein in Formula 2,
L1 is *-C(=O)-*', *-C(=S)-*', *-C(=O)-O-*', *-C(=O)-N(Q1)-*', *-O-*', *-S-*' or *-N(Q1)-*'
* and *' are each a binding site with a neighboring atom,
n1 and n2 are each independently an integer of 0 to 5,
R₃ to R₆ and Q₁ are each independently: hydrogen, deuterium, -F, -Cl, -Br, -I, a hydroxyl group, a cyano group, or a nitro group; or
a methyl group, an ethyl group, an *n*-propyl group, an isopropyl group, an *n*-butyl group, a *sec*-butyl group, an isobutyl group, a *tert*-butyl group, an *n*-pentyl group, a *tert-*pentyl group, a neopentyl group, an isopentyl group, a *sec*-pentyl group, a 3-pentyl group, a *sec*-isopentyl group, an *n*-hexyl group, an isohexyl group, a *sec*-hexyl group, a *tert*-hexyl group, an *n*-heptyl group, an isoheptyl group, a *sec*-heptyl group, a *tert*-heptyl group, an *n-*octyl group, an isooctyl group, a *sec*-octyl group, a *tert*-octyl group, an *n*-nonyl group, an isononyl group, a *sec*-nonyl group, a *tert*-nonyl group, an *n*-decyl group, an isodecyl group, a *sec*-decyl group, a *tert*-decyl group, a methoxy group, an ethoxy group, an *n*-propoxy group, an isopropoxy group, an *n*-butoxy group, a *sec*-butoxy group, an isobutoxy group, a *tert*-butoxy group, an *n*-pentoxy group, a *tert*-pentoxy group, a neopentoxy group, an isopentoxy group, a *sec*-pentoxy group, a 3-pentoxy group, a *sec*-isopentoxy group, an *n-*hexoxy group, an isohexoxy group, a *sec*-hexoxy group, a *tert*-hexoxy group, an *n*-heptoxy group, an isoheptoxy group, a *sec*-heptoxy group, a *tert*-heptoxy group, an *n*-octoxy group, an isooctoxy group, a *sec*-octoxy group, a *tert*-octoxy group, an *n*-nonoxy group, an isononoxy group, a *sec*-nonoxy group, a *tert*-nonoxy group, an *n*-decoxy group, an isodecoxy group, a *sec*-decoxy group, or a *tert*-decoxy group, which is unsubstituted or substituted with deuterium, -F, -Cl, -Br, -I, a hydroxyl group, a cyano group, a C₆-C₆₀ aryl group, or any combination thereof; or
a phenyl group, a pentalenyl group, a naphthyl group, an azulenyl group, an indacenyl group, an acenaphthyl group, a phenalenyl group, a phenanthrenyl group, an anthracenyl group, a fluoranthenyl group, a triphenyllenyl group, a pyrenyl group, a chrysenyl group, a perylenyl group, a pentaphenyl group, a hepthalenyl group, a naphthacenyl group, a picenyl group, a hexacenyl group, a pentacenyl group, a rubisenyl group, a coronenyl group, or an ovalenyl group, which is unsubstituted or substituted with deuterium, -F, -Cl, -Br, -I, a hydroxyl group, a cyano group, a C₁-C₂₀ alkyl group, a C₁-C₂₀ alkoxy group, a C₆-C₆₀ aryl group, or any combination thereof.

11. The adhesion-imparting resin of claim 1,
wherein the ethylenically unsaturated monomer containing an epoxy group is a compound represented by Formula 2-3 or Formula 2-4:

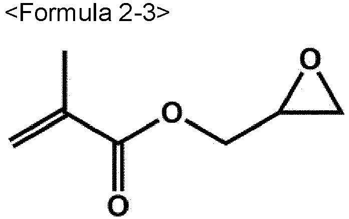

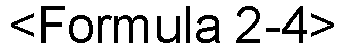

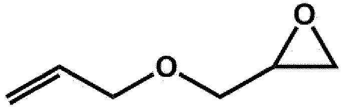

12. The adhesion-imparting resin of claim 1, further comprising a molecular weight regulator bound at at least one end of both ends of the adhesion-imparting resin.

13. The adhesion-imparting resin of claim 12,
wherein the molecular weight regulator includes a thiol-based molecular weight regulator, a halocarbon-based molecular weight regulator, or any combination thereof.

14. The adhesion-imparting resin of claim 12,
wherein a weight of the molecular weight regulator is 1 wt% to 10 wt% with respect to a total weight of the adhesion-imparting resin.

15. The adhesion-imparting resin of claim 1,
wherein in the adhesion-imparting resin, an amount of the repeating unit (a) derived from the petroleum resin monomer is more than an amount of the repeating unit (b) derived from the ethylenically unsaturated monomer containing an epoxy group.

16. The adhesion-imparting resin of claim 1,
wherein in the adhesion-imparting resin,
a weight of the repeating unit (a) derived from the petroleum resin monomer is 50 wt% or more and less than 100 wt% with respect to a total weight of the adhesion-imparting resin, and
a weight of the repeating unit (b) derived from the ethylenically unsaturated monomer containing an epoxy group is more than 0 wt% to 50 wt% or less with respect to a total weight of the adhesion-imparting resin.

17. The adhesion-imparting resin of claim 1,
wherein the adhesion-imparting resin is for an acryl-based adhesive, or for an amine-based adhesive.

18. A method of preparing the adhesion-imparting resin according to any one of claims 1 to 17, the method comprising: (a) obtaining a polymer by carrying out a polymerization reaction of a reaction composition comprising a petroleum resin monomer and an ethylenically unsaturated monomer containing an epoxy group; and
(b) obtaining an adhesion-imparting resin by carrying out a degassing reaction of the polymer.

19. The method of claim 18,
wherein in the step (a) of obtaining the polymer, the polymerization reaction is carried out at a temperature of 50 °C to 300 °C, for 60 minutes to 240 minutes.

20. The method of claim 18,
wherein in the step (b) of obtaining the adhesion-imparting resin, the degassing reaction is carried out at a temperature of 200 °C to 300 °C, at a pressure of 1 mbar to 50 mbar, for 1 minute to 20 minutes.
